# EUROPÄISCHE PATENTANMELDUNG

(11) **EP 0 965 275 A1**
(43) Veröffentlichungstag der Anmeldung: **22.12.1999**
(21) Anmeldenummer: 98108967.5
(22) Anmeldetag: 16.05.1998
(51) Int. Cl.: A23G 3/00

(54) **Verfahren zur Herstellung einer Marzipanersatzmasse sowie Marzipanersatzmasse**

(71) Anmelder: ültje GmbH & Co. KG, 26723 Emden (DE)
(72) Erfinder: Schmidchen, Heinz, 26725 Emden (DE); Vogeler, Kurt, 26506 Norden (DE)
(74) Vertreter: Reinhardt, Harry

(57) **Zusammenfassung**

Eine Marzipan- bzw. Persipanersatzmasse besteht aus einer Mischung aus Hülsenfrüchten, Süßungsmittel, einschließlich Honig und Stärke. Dadurch wird eine Ersatzmasse geschaffen, die kostengünstiger und umweltfreundlicher in der Herstellung und Verarbeitung als Marzipan bzw. Persipan ist und die einen geringeren Zuckeranteil als Marzipan bzw. Persipan aufweist sowie darüber hinaus universell einsetzbar ist.

## Beschreibung

Die Erfindung betrifft ein Verfahren zur Herstellung einer Marzipan- bzw. Persipan-Ersatzmasse nach dem Oberbegriff des Anspruches 1 sowie eine Marzipanersatzmasse nach dem Oberbegriff des Anspruches 7.

Marzipan und Persipan werden als Überzugs-, Füll- und Plastifiziermasse in der Backwaren- und Süsswaren-Industrie einschliesslich der Bäckerei und Konditorei in erheblichem Umfang eingesetzt. Diese aus Mandeln und Zucker bzw. entsprechenden Ersatzstoffen bestehenden Massen sind jedoch vergleichsweise teuer.

Aus diesem Grunde wurde bereits in der DE-PS 285 332 ein Verfahren zur Herstellung von Backmassen aus Ölsamen unter Zusatz von Stärke vorgeschlagen, welche als Zusatz zur Marzipanherstellung verwendet werden können. Dabei werden die Ölsamen, z.B. auch Erdnüsse, mit Zucker und Stärke vermischt und hieraus dann zunächst ein Teig gemacht, der bei entsprechender Wärme abgebacken wird. Anschliessend wird das Backgut zermahlen und der Marzipanmasse zugefügt, wobei bedarfsweise dem zermahlenen Backgut Öl zugesetzt werden muss. Insofern sind für die Zubereitung dieses Zusatzstoffes zum Marzipan mehrere, z.T. auch energieaufwendige Schritte wie z.B. das Backen, erforderlich.

Aus der DE-PS 22 41 240 B2 ist bekannt, eine Füllmasse herzustellen, die auf Sojaprodukten basiert und als freifliessendes Pulver ausgebildet ist. Dieses freifliessende Pulver enthält Zucker, gelatinierte Stärke und proteinhaltiges Material auf Sojabasis. Abgesehen davon, dass dieses Pulver auf Sojabasis und damit nicht auf der Basis von Hülsenfrüchten beruht, ist die Füllmasse lediglich wiederum ein Zusatzstoff zur Marzipanersatzmasse. Auf der gleichen Basis beruht die in der DE-27 20 691 A1 erläuterte Roh- und Füllmasse, wobei dort zusätzlich Öl und entbitterte Sojakerne eingebracht werden müssen, was die gesamte Herstellung aufwendig macht.

Aus der DD-PS 206 622 ist es bekannt, eine Füllmasse aus fettarmen Leguminosensamen herzustellen. Abgesehen davon, dass anstelle fetthaltiger Erdnüsse ausgewählte fettarme Leguminosensamen verwendet werden, ist es zudem erforderlich, zusätzliche Füllstoffe oder Weichfette bzw. Emulgatoren zuzuführen. Als fettarme Leguminosensamen werden insbesondere Erbsen, weisse Bohnen und Linsen verwendet. Nach dem Wässern der Samen muss diesen zunächst das Wasser mittels einer Extraktion entzogen werden, bevor ein Zerkleinern der getrockneten Masse und Mischen dieser Masse möglich ist. Hierzu ist ein zusätzlicher Aufwand zu treiben.

Aus der DD 223 627 A1 ist es bekannt, eine Füllmasse aus Ackerbohnenmehl und Stärkesirup herzustellen. Zur Weiterverarbeitung ist es jedoch erforderlich, die Masse einem Prozess mit Chemikalien wie HCl-saures-Wasser oder Neutralisierungen wie NaOH zu unterziehen.

Ausgehend von diesem Stand der Technik liegt der vorliegenden Erfindung die Aufgabe zugrunde, ein Verfahren der eingangs genannten Gattung bzw. eine Marzipanersatzmasse so weiterzubilden, dass sie kostengünstiger und umweltfreundlicher in der Herstellung als Marzipan bzw. Persipan ist.

Diese Aufgabe wird durch ein Verfahren mit den Merkmalen des Anspruches 1 bzw. für eine Marzipanersatzmasse mit den Merkmalen des Anspruches 7 gelöst.

Durch die Verwendung der Hülsenfrüchte besitzt diese Marzipanersatzmasse einen geringeren Zuckeranteil als Marzipan bzw. Persipan und ist universell einsetzbar. Es ist im Verfahren nicht erforderlich, die Masse zu backen oder der Masse aufwendig das Wasser zu entziehen. Vielmehr kann die Masse, insbesondere wenn sie gemäss Anspruch 3 gewässert wurde, unmittelbar weiterverarbeitet werden.

Weitere Vorteile ergeben sich aus den Unteransprüchen.

Im folgenden wird die Erfindung anhand eines Ausführungsbeispieles näher erläutert.

Die entsprechende Masse wird hergestellt aus gerösteten, mit Wasser aufgekochten bzw. in Wasser eingeweichten Hülsenfrüchten, insbesondere Erdnüssen. Je nach ihrer weiteren Verarbeitung werden die Hülsenfrüchte mit Zucker in kristallisierter oder pulverisierter Form oder mit Zuckerersatzstoffen wie Dextrose, Fructose oder mit Honig oder entsprechenden Mischungen aus wenigstens zwei dieser Süssungsmittel versetzt. Anschliessend wird diese Masse zermahlen, wobei der Mahlgrad bzw. die Feinheit der Grundmasse abhängig ist von ihrer weiteren Verwendung. Der Zuckeranteil kann auf weniger als 25 Gewichtsprozent reduziert werden. Der Anteil der Hülsenfrüchte bzw. der Erdnussanteil beträgt maximal 70%. Die Masse wird ggf. mit Stärke, insbesondere Stärkemehl bis zu maximal 10 Gewichtsprozent angereichert.

Vorteilhafterweise kann durch den Entfall zusätzlicher Extraktions- oder Backschritte die Zugabe der Zuschlagstoffe jederzeit erfolgen. So können die Zuschlagstoffe vor, während oder auch nach dem Mahlen der Hülsenfrüchte zugegeben werden.

Die weitere Verarbeitung der Grundmasse erfolgt nach dem Mischen der Zutaten durch Abrösten in einem mit Dampf, elektrisch oder anderweitig beheizten Abröstkessel. Die so hergestellte Marzipanersatzmasse kann als Füllung oder Überzugsmittel in der Back- und Süsswarenindustrie wie auch im Handwerk eingesetzt werden oder für sich allein als plastisches Material für die Konditorei Verwendung finden.

Ein Herstellungsprozess kann beispielsweise wie folgt ausgeführt werden:
Mit Heissluft getrocknete, mechanisch blanchierte Erdnüsse werden nach dem Abkühlen 24 Stunden im kalten Wasser eingeweicht, dann wird das Wasser abgegossen. Den Erdnüssen werden 25 Gewichtsprozent Zucker in kristalliner Form zugefügt, dann wird das Ganze in einer Korundscheiben-Mühle mit Mahlspalt 0,2 mm zermahlen. Die Temperatur des Mahlgutes sollte 100°, vorzugsweise 70°C nicht überschreiten.

Der gemahlenen Grundmasse werden anschliessend maximal 10 Gewichtsprozent, vorzugsweise 5 Gewichtsprozent Maisstärke zugefügt und mit der Grundmasse vermischt. Die dann vorhandene flüssige Masse wird zum Abrösten im Abröstkessel verarbeitet. Die Temperaturen beim Abrösten können bis zu 160°C betragen.

## Patentansprüche

1. Verfahren zur Herstellung einer Marzipan- bzw. Persipanersatzmasse, dadurch gekennzeichnet, dass zur Herstellung Hülsenfrüchte, Süssungsmittel und ggf. Stärke lediglich gemischt werden.

2. Verfahren nach Anspruch 1, dadurch gekennzeichnet, dass maximal 70% Hülsenfrüchte, bis zu 25 Gewichtsprozent Süssungsmittel und ggf. maximal 10 Gewichtsprozent Stärke bzw. Stärkemehl gemischt werden.

3. Verfahren nach Anspruch 1 oder 2, dadurch gekennzeichnet, dass als Hülsenfrüchte Erdnüsse verwendet werden, die vorzugsweise vor dem Mischen gewässert werden.

4. Verfahren nach Anspruch 3, dadurch gekennzeichnet, dass mit Heissluft getrocknete, blanchierte Erdnüsse nach dem Abkühlen in kaltem Wasser eingeweicht werden und dann das Süssungsmittel in kristalliner Form beigemengt wird, wobei dieses Gemenge dann zermahlen und dem Mahlgut bedarfsweise Stärke zugefügt wird.

5. Verfahren nach einem der Ansprüche 1-4, dadurch gekennzeichnet, dass als Süssungsmittel Zucker oder Zuckeraustauschstoffe oder Honig oder eine Mischung, bestehend aus wenigstens zwei dieser Süssungsmittel verwendet wird.

6. Verfahren nach einem der vorhergehenden Ansprüche, dadurch gekennzeichnet, dass die Endverarbeitung der Mischung durch Abrösten im Abröstkessel erfolgt.

7. Marzipanersatzmasse, dadurch gekennzeichnet, dass sie aus einer Mischung besteht, die Hülsenfrüchte, Süssungsmittel und Stärke umfasst.

8. Marzipanersatzmasse nach Anspruch 7, dadurch gekennzeichnet, dass sie maximal 70 Gewichtsprozent Hülsenfrüchte, bis zu 25 Gewichtsprozent Süssungsmittel und ggf. maximal 10 Gewichtsprozent Stärke bzw. Stärkemehl umfasst.

9. Marzipanersatzmasse nach Anspruch 7 oder 8, dadurch gekennzeichnet, dass die Hülsenfrüchte Erdnüsse sind.

10. Marzipanersatzmasse nach einem der Ansprüche 7-9, dadurch gekennzeichnet, dass das Süssungsmittel Zucker oder Zuckeraustauschstoffe oder Honig oder eine Mischung aus wenigstens zwei dieser Süssungsmittel ist.
